# EUROPEAN PATENT APPLICATION

(11) **EP 2 328 054 A1**
(43) Date of publication of application: **01.06.2011**
(21) Application number: 10186626.7
(22) Date of filing: 05.10.2010
(51) Int. Cl.: G05D 1/00

(54) **Systems and methods of detecting low takeoff performance due to incorrect weight information**

(30) Priority: 19.11.2009 US 621842
(71) Applicant: Honeywell International Inc., Morristown, NJ 07962 (US)
(72) Inventor: Ishihara, Yasuo, Morristown, NJ 07962-2245 (US); Johnson, Steve, Morristown, NJ 07962-2245 (US)
(74) Representative: Buckley, Guy Julian

(57) **Abstract**

Systems and methods for performing V speeds verification. An example system determines if during a takeoff roll there is enough runway left for the aircraft to stop with a predetermined braking force. If an incorrect "too small" weight had been used to previously compute Vspeeds (e.g., V₁) and engine takeoff setting, the predicted point (based on the actual aircraft acceleration) to reach V₁ provides not enough runway length remaining to stop. If such a situation is determined, an alert is outputted to the flight crew.

## Description

### BACKGROUND OF THE INVENTION

Aircraft weight is one of the primary inputs used to compute the takeoff speeds (V₁, V_{R} and V₂). However, if the aircraft weight used for the computation differs significantly from the true aircraft weight, the aircraft may not be able to lift off in time. There have been accidents/incidents where a wrong weight was used to compute V-speeds and the aircraft ran off the runway end since it could not reach the "real" takeoff speed in time.

Based on the aircraft certification requirements V₁ is the maximum speed at which the crew can decide to reject the takeoff, and is ensured to stop the aircraft within the limits of the runway. When an incorrect "too small" weight is used, the computed V₁ is much smaller than the correct V₁. In this case the actual aircraft acceleration becomes lower than the predicted acceleration, thus by the time the aircraft reaches the computed V₁ there may not be enough runway left to stop, which then violates the V₁ definition. This situation can be made worse when reduced thrust takeoffs are used. A reduced thrust takeoff can be used when the aircraft actual takeoff weight is lower than the maximum certified takeoff weight. In these cases it is possible to takeoff at a thrust less than the Maximum Takeoff Thrust. It is advantageous to adjust the thrust to the actual weight, as it increases engine life and reliability, while reducing maintenance and operating costs. An error in the weight will then result in both an incorrect takeoff speed being computed but also may result in an incorrect reduction in the takeoff thrust.

### SUMMARY OF THE INVENTION

The present invention provides systems and methods for predicting where an aircraft will be during takeoff when reaching V₁. An example system determines if during a takeoff roll there is enough runway left for the aircraft to stop with a predetermined braking force upon reaching V₁. If an incorrect "too small" weight had been used to previously compute Vspeeds (e.g., V₁) and engine takeoff setting, the predicted point (based on the actual aircraft acceleration) to reach V₁ provides not enough runway length remaining to stop. If such a situation is determined, an alert is outputted to the flight crew.

### BRIEF DESCRIPTION OF THE DRAWINGS

Preferred and alternative embodiments of the present invention are described in detail below with reference to the following drawings:

FIGURE 1 illustrates an example aircraft formed in accordance with an embodiment of the invention;

FIGURE 2 is a flow chart of an example process performed by the system shown in FIGURE 1; and

FIGURE 3 illustrates an aircraft that is in a takeoff scenario.

### DETAILED DESCRIPTION OF THE INVENTION

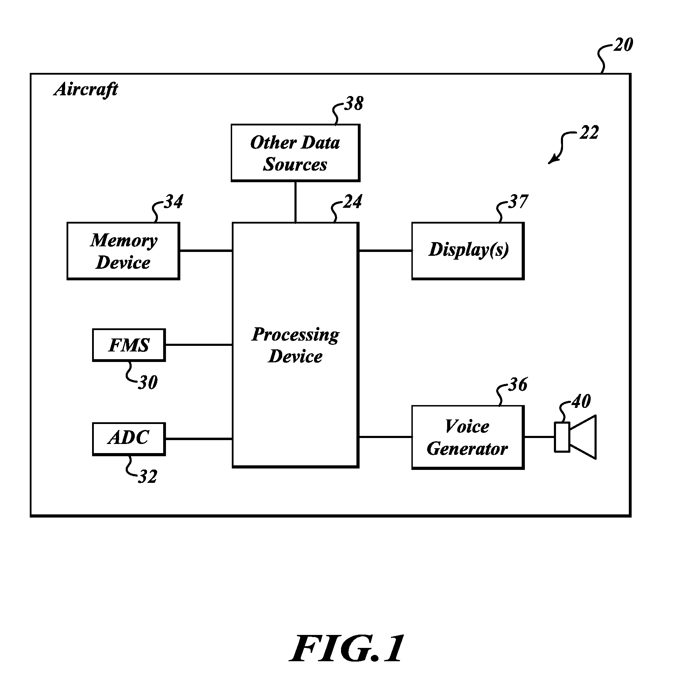

FIGURE 1 illustrates an example aircraft 20 having a system 22 that performs V speed verification. The system 22 includes a processing device 24, a flight management system (FMS) 30, an air data computer (ADC) 32, a memory device 34, a voice generator 36, one or more displays 37, other data sources 38, and one or more speakers 40.

The processor 24 receives ground speed and/or acceleration information and aircraft position information from the other data sources 38, such as a global positioning system (GPS) or inertial reference system (IRS) and runway length from airport information stored in the memory device 34. The processor 24 uses the received information in order to generate an acceleration value and determine the amount of runway distance remaining. Next, the processor 24 uses the determined acceleration value and the amount of runway distance remaining to predict where the aircraft 20 will reach a previously determined and entered critical engine failure recognition speed (V₁) (normally entered by the flight crew into the FMS 30. If the processor 24 determines that the runway distance remaining based on the prediction is less than a previously determined distance required to stop the aircraft on the runway (i.e., distance remaining based on previously determined V₁), then an alert is generated and outputted to the flight crew via the displays 37 or the one or more speakers 40 via the voice generator 36.

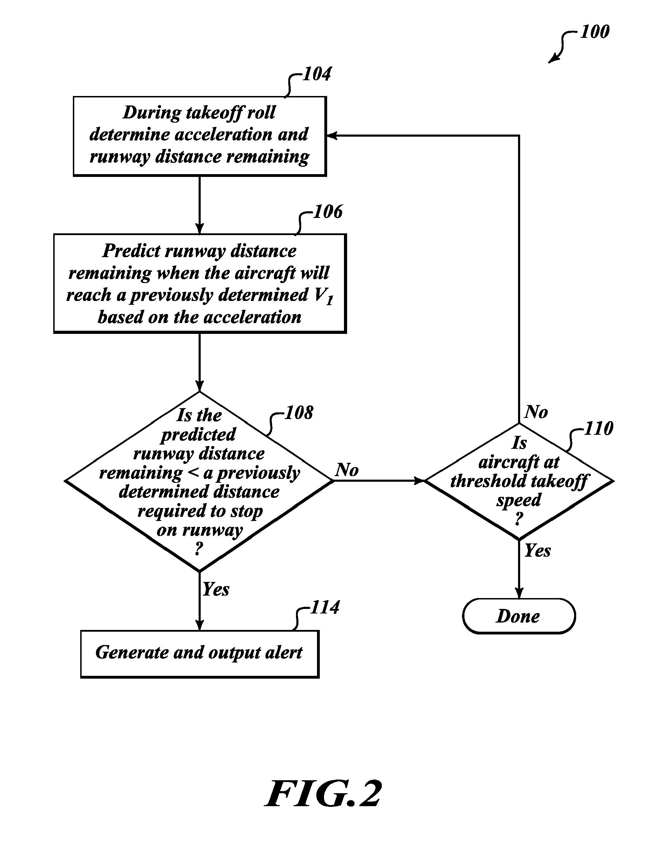

FIGURE 2 illustrates a flow chart of an example process 100 performed by the system shown in FIGURE 1. First, at a block 104, the acceleration of the aircraft 20 and the amount of runway distance remaining are determined by the processor 24 during takeoff roll, based on information received from other sources (e.g., the memory device 34, the FMS 30, the other sources 38). Next, at a block 106, the processing device 24 predicts the runway distance remaining when the aircraft will reach a previously determined V₁ based on the current acceleration, current ground speed and runway information. Then, at a decision block 108, the processing device 24 determines whether the predicted runway distance remaining is less than a previously determined distance required to stop the aircraft on the runway. If the predicted runway distance remaining is not less than the previously determined distance required to stop the aircraft 20 on the runway, then the process 100 continues to a decision block 110. At the decision block 110, the processing device 24 determines whether the aircraft is within a threshold value from a takeoff speed (e.g., V_{R}). If the aircraft 20 is determined to be within the threshold value from the takeoff speed, then the process 100 is done. If the aircraft is determined not to be at the threshold value from the takeoff speed, then the process 100 returns to block 104 to repeat.

If, at the decision block 108, the predicted runway distance remaining is less than the previously determined distance required to stop the aircraft 20 on the runway, then an alert is generated and outputted at block 114. The alert is outputted (visually, audibly and/or tactilely) to the flight crew.

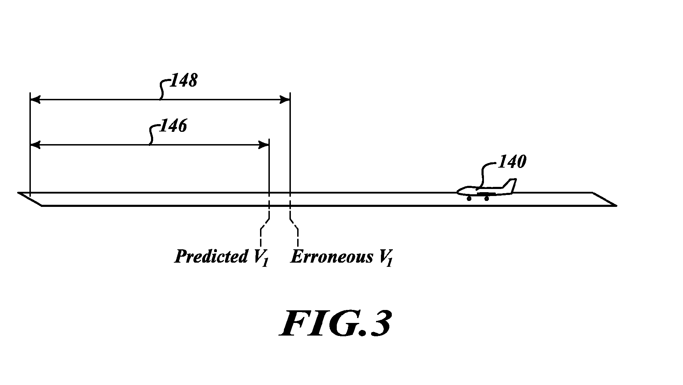

FIGURE 3 illustrates an aircraft 140 that is in a takeoff scenario. If the aircraft 140 is accelerating too slowly on the runway, then the point at which the aircraft 140 will reach the previously determined V₁ location 146 may be less than the distance 148 required to stop the aircraft 140 with required deceleration (RD) during a rejected takeoff (RTO). RD_{RTO} is a predetermined rate of deceleration for a particular aircraft type. An alert is outputted if the point at which the aircraft 140 will reach the previously determined V₁ location 146 is less than the RD_{RTO} distance 148 by a predefined threshold amount.

There may be a number of reasons why the aircraft 140 is not accelerating fast enough to reach V₁ prior to the distance required to stop with RD_{RTO}. For example, some reasons might be engine malfunction or a miscalculation of the aircraft's weight, thus resulting in the present power setting not being great enough to meet the takeoff requirements.

## Claims

1. A method performed by a computer-based system (24) on an aircraft (20), the method comprising:
a) determining a current acceleration value of the aircraft during a takeoff scenario while the aircraft is on a runway;
b) predicting runway distance remaining when the aircraft will reach a previously determined V₁ based on the current acceleration value, current aircraft ground speed and previously stored runway information; and
c) generating and outputting an alert if the predicted runway distance remaining value is less than a previously determined distance to stop the aircraft on the runway with a previously defined deceleration value during a rejected takeoff.

2. The method of Claim 1, wherein outputting comprises audibly outputting the generated alert.

3. The method of Claim 1, wherein outputting comprises visually outputting the generated alert.

4. The method of Claim 1, further comprising repeating a) - c) if the predicted runway distance remaining value is not less than a previously determined distance to stop the aircraft on the runway with required deceleration during a rejected takeoff and the aircraft has not reached a speed within a threshold from a predetermined rotation speed.

5. A computer-based system on an aircraft, the system comprising:
a memory device (34) configured to store runway information and a
previously determined V₁;
an output device (36, 37, 40); and
a processing device (24) in signal communication with the memory device
and the output device, the processing device configured to:
determine a current acceleration value of the aircraft during a
takeoff scenario while the aircraft is on a runway,
predict runway distance remaining when the aircraft will reach the
stored previously determined V₁ based on the current acceleration value, current aircraft ground speed, and the stored runway information,
generate an alert if the predicted runway distance remaining value
is less than a previously determined distance to stop the aircraft on the runway with a previously defined deceleration value during a rejected takeoff, and
output the generated alert to the output device.

6. The method of Claim 5, wherein the output device audibly outputs the generated alert.

7. The method of Claim 5, wherein the output device visually outputs the generated alert.

8. The method of Claim 5, wherein the processing device repeats determination, prediction, generation and outputting if the predicted runway distance remaining value is not less than a previously determined distance to stop the aircraft on the runway with required deceleration during a rejected takeoff and the aircraft has not reached a speed within a threshold from a predetermined rotation speed.

9. A computer-based system on an aircraft, the system comprising:
a means for determining a current acceleration value of the aircraft during
a takeoff scenario while the aircraft is on a runway;
a means for predicting runway distance remaining when the aircraft will
reach a previously determined V₁ based on the current acceleration value, current aircraft ground speeed, and previously stored runway information;
a means for generating and an alert if the predicted runway distance
remaining value is less than a previously determined distance to stop the aircraft on the runway with a previously defined deceleration value during a rejected takeoff; and
a means for outputting the generate alert.

10. The method of Claim 9, further comprising a means for repeating a) - c) if the predicted runway distance remaining value is not less than a previously determined distance to stop the aircraft on the runway with required deceleration during a rejected takeoff and the aircraft has not reached a speed within a threshold from a predetermined rotation speed.
